# EUROPEAN PATENT SPECIFICATION

(11) **EP 1 881 643 B1**
(45) Date of publication and mention of the grant of the patent: **15.04.2009**
(21) Application number: 06752966.9
(22) Date of filing: 15.06.2006
(51) Int. Cl.: H04L 12/26

(54) **A METHOD FOR PROTECTION SWITCHING OF THE PSEUDO WIRE IN THE PACKET SWITCH NETWORK AND THE DEVICE THEREOF**
VERFAHREN ZUR SCHUTZUMSCHALTUNG EINES PSEUDO-KABELS IN EINEM PAKETVERMITTELTEN NETZ SOWIE ENTSPRECHENDE VORRICHTUNG
PROCEDE DE COMMUTATION DE PROTECTION DE PSEUDO-CABLE DANS LE RESEAU A COMMUTATION DE PAQUETS ET DISPOSITIF ASSOCIE

(30) Priority: 30.09.2005 CN 200510107438
(43) Date of publication of application: 23.01.2008
(73) Proprietor: Huawei Technologies Co., Ltd., Longgang District Shenzhen, Guangdong Province, 518129 (CN)
(72) Inventor: LI, Xixiang, Guangdong Province 518129 (CN)
(74) Representative: Viering, Jentschura & Partner
(86) International application number: PCT/CN2006/001349
(87) International publication number: WO 2007/036106

(56) References cited:
- CN-A- 1 625 176
- US-A1- 2003 063 560
- US-A1- 2004 170 173
- US-A1- 2004 193 724
- US-A1- 2005 147 104
- BRYANT S ET AL: "Pseudo Wire Emulation Edge-to-Edge (PWE3) Architecture; rfc3985.txt;" IETF STANDARD, INTERNET ENGINEERING TASK FORCE, IETF, CH, March 2005 (2005-03), XP015009756 ISSN: 0000-0003
- LUCA MARTINI (EDITOR) CISCO SYSTEMS INC MATTHEW BOCCI (EDITOR) ALCATEL NABIL BITAR (EDITOR) VERIZON: "Requirements for inter domain Pseudo-Wires; draft-ietf-pwe3-ms-pw-req uirements-00.txt" IETF STANDARD-WORKING-DRAFT, INTERNET ENGINEERING TASK FORCE, IETF, CH, vol. pwe3, June 2005 (2005-06), XP015040850 ISSN: 0000-0004

## Description

### Field of the Invention

The present invention relates to the field of communications, and more particularly, to a method and device for protective switching of pseudo-wires (PWs) on a Packet Switching Network (PSN).

### Background of the Invention

Several standards for Pseudo-Wire Emulation were defined in the Internet Engineering Task Force Pseudo-Wire Emulation Edge-to-Edge working group (IETF PWE3 WG). According to the principle of the PWE3, an edge-to-edge tunnel is created for transporting various original Layer 1 and Layer 2 services, which include Asynchronous Transfer Mode (ATM), Ethernet, Frame Relay, High level Data Link Control (HDLC) / Peer-to-Peer Protocol (PPP), Integrated Services Digital Network (ISDN), Synchronous Digital Hierarchy (SDH) / Synchronous Optical Network (SONET), etc. The PWE3 assures all of the Quality of Service (QoS) required for the various services being transported.

In practical applications, for the purpose of enabling PWs to be common across multiple carriers and reducing the number of tunnels, stitching and switching of PWs are required. Such PWs are called multi-segment pseudo-wires (MS-PWs), which are specified by the relevant draft standards in IETF PWE3 WG. The PWs that are not required to be switched and stitched are called single-segment pseudo-wires (SS-PWs).

Generally, PWs bear private line services. Such as for banks, securities markets, and enterprises, relatively important private lines need to be protected on PSNs. However, the PW protection standard is not defined in standards organizations, such as IETF PWE WG, ITU-T, Metro Ethernet Forum (MEF) and Multiprotocol Label Switching / Frame Relay / Asynchronous Transfer Mode Alliance (MFA).

According to a method for protective switching of PWs in the prior art, PWs are indirectly protected through the protection of each segment of tunnels. If a PW fails within a certain segment of a tunnel, the protection of the segment of the tunnel, i.e., the switching of all of the PWs within the segment of the tunnel, will be performed. In this case, one failed PW will result in the simultaneous switching of all of the PWs within the segment of the tunnel. As a result, the switching efficiency is not high, and the switching of some good working PWs may be wrongly performed. If a fault occurs in protective connections for a certain PW, which cannot be isolated from other PWs by the protective switching, it results in the interruption of the services on the PW and the repeating fluctuation during the protective process of the PW, even network paralysis.

According to another method for protective switching of PWs in the Prior art, for each PW, a working PW and a protective PW are configured. The system monitors each of the working PWs and each of the protective PWs. If a working PW fails, the system starts the protective switching mechanism to switch the service to a protective PW. If the method is adopted, the system is required to monitor each of the PWs, thereby laying a heavy burden on the system and degrading the system performance. Moreover, if the number of failed PWs is large, the switching speed will be greatly reduced and the switching time will exceed the maximum switching time allowed by the communications network, e.g., 50ms. Therefore, the QoS is degraded.
US 2003/0063560 A1 discloses a system and method of protection switching in a communications network that makes more efficient use of resources in the network and reduces the loss of data traffic carried by the network. The communications network includes an established working path and an established protect path interconnecting a source node and a sink node. The source node and the sink node are configured to perform label switching on the network. The source node receives primary data traffic and secondary data traffic over one or more communications paths. In a fault-free condition, the source node sends the primary data traffic over the working path to the sink node, and sends the secondary data traffic over the protect path to the sink node. In the event of a fault or switchover condition in the working path, the source node performs traffic trunk and label merging on the primary and secondary traffic, and sends the merged traffic over the protect path to the sink node.
IETF RFC 398: "Pseudo Wire Emulation Edge-to-Edge Architecture" defines Pseudo-Wire Emulation as "Pseudo Wire Emulation ... the emulation of services such as Frame-Relay, ATM, Ethernet, TDM, and SONET/SDH over packet switched networks using IP or MPLS".

### Summary of the Invention

The embodiments of the present invention provide not only a method for protective switching of PWs on a PSN, but also a device for protective switching of PWs on a PSN, which solves the problems of edge-to-edge protective switching of PWs on an existing PSN.

The technical solutions of the present invention include:

A method for protective switching of PWs on a PSN, in which the PWs on the PSN are grouped into a working PW group (PWG) and a protective PW group corresponding to each other according to a preset criterion, the method further includes:

Monitoring the state of the working PWG and the protective PWG, and performing on services the protective switching between the working PWG and the protective PWG when it is determined that a protective switching condition is met as a result of the monitoring of the state of the working pseudo-wire group and the protective pseudo-wire group.

One-to-one mapping is established between the PWs in the working PWG and the PWs in the protective PWG according to an order in which the PWs are arranged in the two PWGs respectively.

The preset criterion includes, but is not limited to, the same source and destination, the same path, the same type and the same QoS requirement, or a criterion specified according to transmission requirements.

The PW in the working PWG and the protective PWG is a single-segment PW or a multi-segment PW.

One or more PWs are contained in the working PWG and the protective PWG.

It is determined that the protective switching condition is met, if a monitored PW in a PWG is in Local Transmit Fault (LTF) state and/or Local Receive Fault (LRF) state, and a PW state corresponding to the monitored PW in the other PWG is in a normal state.

The LTF state and the LRF state may be generated by a transmit fault or an interface fault occurring in a PW forwarder on a source provider edge (PE) or a destination provider edge or generated by the server layer of the PW.

It is determined that the protective switching condition is met, if a normal session of the (Virtual Circuit Continuity Verification) VCCV performed for the monitored PW in a PWG has not been established within a prescribed period of time, and the PW corresponding to the monitored PW in the other PWG is in a normal state.

The protective switching performed between the working PWG and the protective PWG can be 1+1, 1:1 or 1:N, unidirectional or bidirectional, recoverable or unrecoverable, manual, or of a mode defined by (Automatic Protective Switching) APS protocols.

A device for protective switching of PWs on a PSN includes:

a grouping unit for grouping PWs on a PSN into a working PWG and a protective PWG corresponding to each other according to a preset criterion;

a PW state monitoring unit for monitoring the state of the working PWG and the protective PWG, and for sending signals to the protective switching unit when it is determined that a protective switching condition is met as a result of the monitoring of the state of the working pseudo-wire group and the protective pseudo-wire group;

a protective switching unit for performing on services the protective switching between the working PWG and the protective PWG according to the received signals.

One-to-one mapping is established between the PWs in the working PWG and the PWs in the protective PWG according to an order in which the PWs are arranged in the two PWGs, respectively.

The preset criterion includes, but is not limited to, the same source and destination, the same path, the same type and the same QoS requirement, or a criterion specified according to transmission requirements.

The PW in the working PWG and the protective PWG is a single-segment PW or a multi-segment PW.

One or more PWs are contained in the working PWG and the protective PWG.

The protective switching performed between the working PWG and the protective PWG can be 1+1, 1:1 or 1:N, unidirectional or bidirectional, recoverable or unrecoverable, manual, or of a mode defined by Automatic Protective Switching (APS) protocols.

It can be seen from the above technical solutions provided by the present invention that, through the grouping of PWs according to a criterion, such as the same source and destination, the same path, the same type and the same QoS requirement, one-to-one mapping is established between the PWs in the working PWG and the PWs in the protective PWG; when a fault occurs in the working PWG, the services on the working PWG can be switched onto the protective PWG. The protective switching is performed only for a desired group, thereby enabling the edge-to-edge grouped protective switching of the PWs on the PSN, so that the problem of edge-to-edge protective switching of PWs on an existing PSN is solved.

As mentioned above, the protective switching operation according to an embodiment of the invention is determined according to the monitoring results, and the protective switching is performed only for the PWG in which the protective switching condition is met. As a result, the simultaneous switching of all of the PWs within a tunnel due to one failed PW can be avoided and the switching efficiency can be improved. Also, the wrong switching of normal PWs and repeating oscillation of the protective switching are avoided.

Further, the system need not monitor each working PW and each protective PW, therefore avoiding laying a heavy burden on the system and degrading the system performance. As a result, the switching speed will be increased and the switching time will not exceed the maximum switching time allowed by the communications network. Therefore, the QoS is improved.

### Brief Description of the Drawings

Figure 1 is a processing flowchart according to one particular embodiment of the method of the present invention;

Figure 2 is a schematic diagram illustrating a reference model of a MS-PW defined in an IETF draft standard;

Figure 3 is a schematic diagram illustrating the network connections in the reference model of the MS-PW; and

Figure 4 is a schematic diagram illustrating the networking according to one embodiment of the present invention.

### Detailed Description of the Embodiments

The present invention is the grouping of PWs on a PSN to establish one-to-one mapping between the working PWG and the protective PWG, monitoring the state of a typical PW in the working PWG and the state of the corresponding protective PW in the protective PWG, and switching the services on the working PWG onto the protective PWG when a fault occurs in the working PWG but the protective PWG is in a normal state.

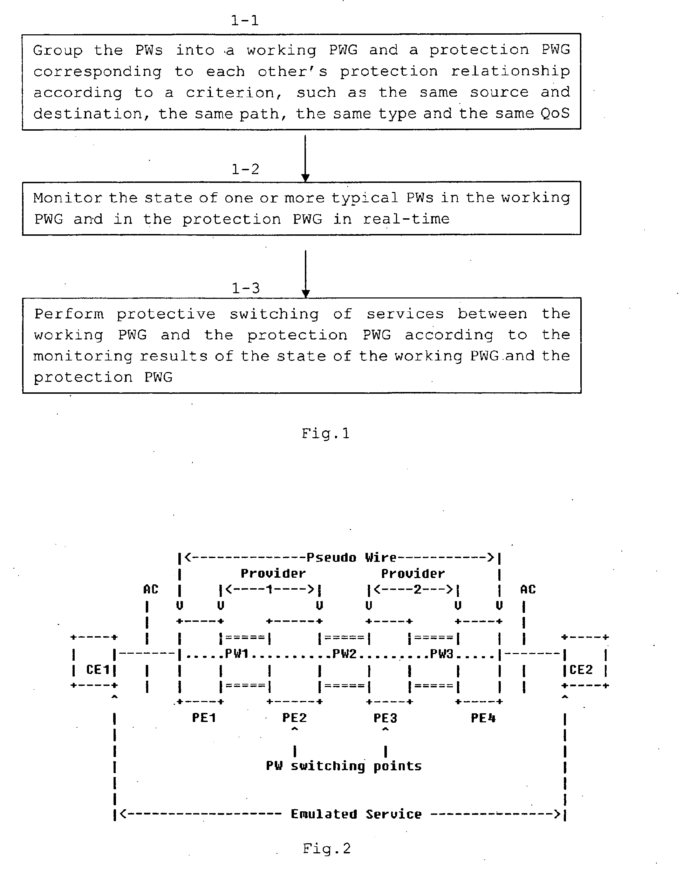

The present invention is now described in detail in conjunction with the accompanying drawings. A processing flowchart according to a particular embodiment of the method of the present invention is shown in Figure 1, in which:

In block 1-1, PWs are grouped into a working PWG and a protective PWG corresponding to each other according to a preset criterion, such as the same source and destination, the same path, the same type, or the same QoS requirement.

According to an embodiment of the invention, first of all, the PWs on the PSN are required to be grouped. The process of the grouping of the PWs will now be explained in conjunction with particular network connections.

A schematic diagram illustrating an MS-PW reference model defined in the IETF draft standard draft-ietf-pwe3-ms-pw-requirements-00.txt is shown in Figure 2, in which CE1 and CE2 are costumer edge network devices, AC is an access circuit, PW switching points are PW switching nodes, Emulated Service is an emulation service, Provider1 and Provider2 are network carriers, Provider1 and Provider2 can be the same carrier within an administrative domain. The edge-to-edge PWs can be implemented as multi-segment PWs.

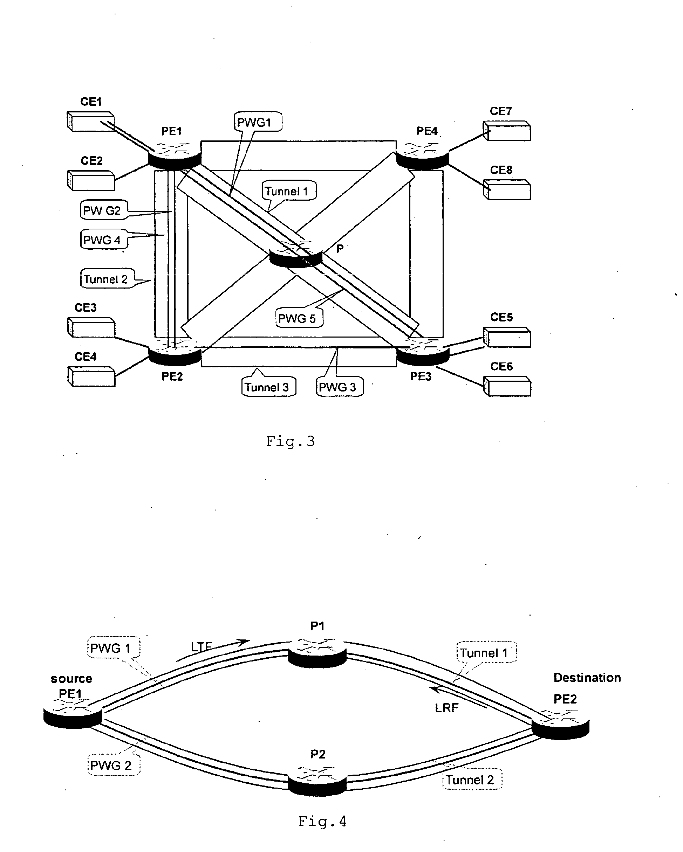

Figure 3 is a schematic diagram illustrating the network connections in the reference model as shown in Figure 2. The multi-segment PWs as shown in Figure 3 belong to the same carrier network.

In the Figure 3 illustrating the network connections, P is an inter-carrier network device, Tunnell runs from PE1 through the PSN network to PE3, Tunnel2 runs from PE1 through the PSN network to PE2, and Tunnel3 runs from PE2 through the PSN network to PE3.

PWG1 carried by Tunnel1 runs from PE1 directly to PE3. PWG2 and PWG3, carried by Tunne12 and Tunnel3 respectively, compose multi-segment PWs and provide edge-to-edge protection for PWG1. PWG4 is from PE1 directly to PE2 and shares Tunnel2 with PWG2. PWG5 shares Tunnel1 with PWG1.

One or more PWs may be contained in the above-mentioned PWGs. Also, the PW in the working PWG and the protective PWG can be a single-segment PW or a multi-segment PW.

According to an embodiment of the invention, the above-mentioned PWGs need to be grouped. The grouping criterions can be the same source and destination, the same path, the same type and the same QoS requirement, or a criterion specified according to transmission requirements. One-to-one mapping is established between the working PWG (i.e., the main PWG) and the protective PWG (i.e., the backup PWG). For example, the above mapping is established between PWG5 and PWG1, between PWG2 or PWG4 plus PWG3 and PWG1, and the like. One-to-one mapping is established between the PWs in the working PWG and the PWs in the protection PWG according to an order in which the PWs are arranged in the two PWGs, respectively.

The PWs, when established, can be grouped according to the Group ID in the PW control signaling, which is defined in IETF draft-ietf-pwe3-control-protocol-17.txt 5.3.2.2. PW Grouping TLV.

In block 1-2, the state of one or more typical PWs in the working PWG and the protective PWG, such as the first PW in the two PWGs, one or more PWs carrying the most important service, or one or more PWs with the largest bandwidth, etc., is monitored in real-time.

After having been grouped, the PWs can be managed conveniently. The state of a certain PWG can be determined by the real-time monitoring of the state of one or more typical PWs in the PWG.

The PW state specified by the IETF draft standard draft-ietf-pwe3-iana-allocation-09.txt is as follows:
0x00000000 - Pseudo Wire forwarding (clear all failures)
0x00000001 - Pseudo Wire Not Forwarding
0x00000002 - Local Attachment Circuit (ingress) Receive Fault
0x00000004 - Local Attachment Circuit (egress) Transmit Fault
0x00000008 - Local PSN-facing PW (ingress) Receive Fault (LRF)
0x00000010 - Local PSN-facing PW (egress) Transmit Fault (LTF)

The above PW state can be transmitted either in an in-band mode or in an out-of-band mode in a control plane. 0x00000001 is an indication of a PW state that has not started the forwarding, which is generally a normal state (for instance, the PW forwarding is intentionally forbidden), and cannot constitute the PW protective switching condition. 0x00000002 and 0x00000004 are indications of the state of the Access Circuit (AC), and cannot constitute the PW protective switching condition. However, 0x00000008 and 0x00000010 are indications of a PW state in which receive faults and transmit faults occur, respectively, and can constitute the PW protective switching condition.

During the PW protective switching, it is also required to determine whether a PW service runs on the working PW (i.e. the main PW) or the protective PW (i.e., the backup PW). The PW state codes are defined as follows:
0x00000000 - PW is in working path
0x10000000 - PW is in protection path
0x00000001 - PW is in working path
0x10000001 - PW is in protection path
0x00000002 - PW is in working path
0x10000002 - PW is in protection path
0x00000004 - PW is in working path
0x10000004 - PW is in protection path
0x00000008 - PW is in working path
0x10000008 - PW is in protection path
0x00000010 - PW is in working path
0x10000010 - PW is in protection path

The above two kinds of state codes are logically overlaid according to a logical OR relationship.

When the system is running, the various PW state defined above are transmitted between the source PE and the destination PE in a periodic session, the period of which can be in a range of 10ms∼10s and will be generally set, but is not limited, to 5s. When the state of the source PE or the destination PE is changing suddenly, e.g., from 0x00000000 to 0x00000008, or from 0x00000010 to 0x00000000, the state session of the PW will be started immediately, so as to ensure that the protective switching time will not exceed the maximum switching time allowed by the communications network services.

Generally, the PW is bidirectionally connected. A PW state is transmitted from PE1 to PE2, which detects the PW state and feeds it back to PE1.

The process of generating LTF (Local Transmit Fault) state and LRF (Local Receive Fault) state is now explained in conjunction with a particular embodiment. As shown in Figure 4, PWG1 is a working PWG; PWG2 is a protective PWG; PE1 is a source PE and PE2 is a destination PE.

The LTF can be generated by a transmit fault or an interface fault occurring in the PW forwarder on PE1 or the server layer of the PW. For example, the generation of the LTF can be triggered by a tunnel transmit fault, which can be a fault occurring in the tunnel, or a fault occurring in other server layers, such as Ethernet, Generic Framing Process (GFP) and SDH/SONET.

The LRF can be generated by a receive fault or an interface fault occurring in the PW forwarder on PE2 or the server layer of the PW. For example, the generation of the LRF can be triggered by a tunnel receive fault, which can be a fault occurring in the tunnel, or a fault occurring in other server layers, such as Ethernet, GFP and SDH/SONET.

In block 1-3, if it is determined that the protective switching condition is met according to the monitoring results of the state of the working PWG and the protective PWG, protective switching between the working PWG and the protective PWG are performed on services.

If one or more typical PWs in a working PWG are detected to be in the LTF or LRF state, and the PWs in the corresponding protective PWG is in a normal state, it is determined that the protective switching condition is met, and now fast protective switching can be performed for the working PWG.

Similarly, if one or more typical PWs in a protective PWG are detected to be in the LTF or LRF state, and the PWs in the corresponding working PWG is in a normal state, fast protective switching can be performed for the protective PWG.

The PW protective switching mechanism acts as a state machine for performing protective switching on the source PE and the destination PE. The protective switching performed between the working PWG and the protective PWG can be 1+1, :1 or 1:N, unidirectional or bidirectional, recoverable or unrecoverable, manual, or of a mode defined by APS (Automatic Protective Switching) protocols. Definitions of these modes can be referred to the ITU-T recommendation G.873, G.873.1.

For example, in the networking diagram of Figure 4, after PE2 has received the LTF transmitted through a state session by PE1, it is determined that a fault has occurred in PWG1, and then the above-described protective switching mechanism is started so that the services on PWG 1 are switched onto PWG2.

Similarly, when PE2 detects that the received state has changed to LRF, it is determined that a fault has occurred in PWG1, and then the above-mentioned protective switching mechanism is started such that the services on PWG1 are switched onto PWG2, and a LRF state message is transmitted to PE1 through the state session between PE1 and PE2.

Alternatively, the PW protective switching can be triggered by VCCV. VCCV is transmitted between the source PE and the destination PE periodically. Link interruption or PE forwarding faults, e.g., software or hardware faults of the forwarder or physical faults of the interface, will result in a case in which a normal session of the VCCV has not been established within a prescribed period of time. In this case, the protective switching condition is also met. Accordingly, the PE having detected such an abnormal state starts the above-described protective switching mechanism. The VCCV can be performed either for a PW or for a PWG. The definition of the VCCV is specified in draft-ietf-pwe3-vccv-04.txt.

An embodiment of the invention also provides a device for protective switching of PWs on a PSN, comprising:

a grouping unit for grouping PWs on a PSN into a working PWG and a protective PWG corresponding to each other according to a preset criterion, one-to-one mapping being established between the PWs in the working PWG and the PWs in the protective PWG according to an order in which the PWs are arranged in the two PWGs respectively, the preset criterion including, but not limited to, the same source and destination, the same path, the same type and the same QoS requirement, or a criterion specified according to transmission requirements;

a PW state monitoring unit for monitoring the state of the working PWG and the protective PWG, and for sending signals to the protective switching unit when it is determined that a protective switching condition is met; and

a protective switching unit for performing on services the protective switching between the working PWG and the protective PWG according to the received signals.

The PW in the working PWG and the protective PWG is a single-segment PW or a multi-segment PW. One or more PWs are contained in the working PWG and the protective PWG.

Moreover, the protective switching performed between the working PWG and the protective PWG can be 1+1, 1:1 or 1:N, unidirectional or bidirectional, recoverable or unrecoverable, manual, or of a mode defined by APS (Automatic Protective Switching) protocols.

## Claims

1. A method for protective switching of pseudo-wires on a Packet Switching Network, comprising:
grouping, according to a preset criterion, the pseudo-wires on a Packet Switching Network into a working Pseudo-Wire group and a protective Pseudo-Wire group corresponding to each other, one-to-one mapping being established between the pseudo-wires in the working pseudo-wire group and the pseudo-wires in the protective pseudo-wire group, and
monitoring the state of the working Pseudo-Wire group and the protective pseudo-wire group, and performing on services the protective switching between the working pseudo-wire group and the protective pseudo-wire group when it is determined that a protective switching condition is met as a result of the monitoring of the state of the working pseudo-wire group and the protective pseudo-wire group.

2. The method according to claim 1, wherein the one-to-one mapping is established between the pseudo-wires in the working pseudo-wire group and the pseudo-wires in the protective pseudo-wire group according to an order in which the pseudo-wires are arranged in the two pseudo-wire groups, respectively.

3. The method according to claim 1, wherein the preset criterion includes, but is not limited to, the same source and destination, the same path, the same type and the same QoS requirement, or a criterion specified according to transmission requirements.

4. The method according to claim 1, wherein the pseudo-wire in the working pseudo-wire group and the protective pseudo-wire group is a single-segment pseudo-wire or a multi-segment pseudo-wire.

5. The method according to claim 1, wherein one or more pseudo-wires are contained in the working pseudo-wire group and the protective pseudo-wire group.

6. The method according to claim 1, wherein it is determined that the protective switching condition is met if a monitored pseudo-wire in a pseudo-wire group is in Local Transmit Fault state and/or Local Receive Fault state, and the pseudo-wire corresponding to the monitored pseudo-wire in the other pseudo-wire group is in a normal state.

7. The method according to claim 6, wherein the Local Transmit Fault state and the Local Receive Fault state can be generated by a transmit fault or an interface fault occurring in the pseudo-wire forwarder on a source provider edge or a destination provider edge, as well as the server layer of the pseudo-wire.

8. The method according to claim 1, wherein it is determined that the protective switching condition is met, if a normal session of the Virtual Circuit Continuity Verification performed for the monitored pseudo-wire in a pseudo-wire group has not been established within a prescribed period of time, and the pseudo-wire corresponding to the monitored pseudo-wire in the other pseudo-wire group is in a normal state.

9. The method according to claim 1, wherein the protective switching performed between the working pseudo-wire group and the protective pseudo-wire group can be 1+1, 1:1 or 1:N, unidirectional or bidirectional, recoverable or unrecoverable, manual, or of a mode defined by Automatic Protective Switching protocols.

10. A device for protective switching of pseudo-wires on a Packet Switching Network, comprising:
a grouping unit for grouping, according to a preset criterion, pseudo-wires on a Packet Switching Network into a working pseudo-wire group and a protective pseudo-wire group corresponding to each other, one-to-one mapping being established between the pseudo-wires in the working pseudo-wire group and the pseudo-wires in the protective pseudo-wire group;
a pseudo-wire state monitoring unit for monitoring the state of the working pseudo-wire group and the protective pseudo-wire group, and for sending signals to the protective switching unit when it is determined that a protective switching condition is met as a result of the monitoring of the state of the working pseudo-wire group and the protective pseudo-wire group; and
a protective switching unit for performing on services the protective switching between the working pseudo-wire group and the protective pseudo-wire group according to the received signals.

11. The device according to claim 10, wherein the one-to-one mapping is established between the pseudo-wires in the working pseudo-wire group and the pseudo-wires in the protective pseudo-wire group according to an order in which the pseudo-wires are arranged in the two pseudo-wire groups respectively.

12. The device according to claim 10, wherein the preset criterion includes, but is not limited to, the same source and destination, the same path, the same type and the same QoS requirement, or a criterion specified according to transmission requirements.

13. The device according to claim 10, wherein the pseudo-wire in the working pseudo-wire group and the protective pseudo-wire group is a single-segment pseudo-wire or a multi-segment pseudo-wire.

14. The device according to claim 10, wherein one or more pseudo-wires are contained in the working pseudo-wire group and the protective pseudo-wire group.

15. The device according to claim 10, wherein the protective switching performed between the working pseudo-wire group and the protective pseudo-wire group can be 1+1, 1:1 or 1:N, unidirectional or bidirectional, recoverable or unrecoverable, manual, or of a mode defined by APS protocols.

16. The method according to claim 1, wherein the monitoring comprises monitoring in real-time the state of one or more typical PWs in the working PWG and the protective PW.

## Patentansprüche

1. Verfahren zur Schutzumschaltung von Pseudo-Leitungen in einem Paketvermittlungsnetz, welches aufweist:
Gruppieren der Pseudo-Leitungen in einem Paketvermittlungsnetz gemäß einem voreingestellten Kriterium in eine Pseudo-Funktionsleitungsgruppe und eine Pseudo-Schutzleitungsgruppe, die einander entsprechen, wobei eine Eins-zu-Eins-Abbildung zwischen den Pseudo-Leitungen in der Pseudo-Funktionsleitungsgruppe und den Pseudo-Leitungen in der Pseudo-Schutzleitungsgruppe eingerichtet ist, und
Überwachen des Zustands der Pseudo-Funktionsleitungsgruppe und der Pseudo-Schutzleitungsgruppe und Durchführen der Schutzumschaltung zwischen der Pseudo-Funktionsleitungsgruppe und der Pseudo-Schutzleitungsgruppe bei Diensten, wenn als ein Ergebnis des Überwachens des Zustands der Pseudo-Funktionsleitungsgruppe und der Pseudo-Schutzleitungsgruppe festgestellt wird, dass eine Schutzumschaltungsbedingung erfüllt ist.

2. Verfahren gemäß Anspruch 1, wobei die Eins-zu-Eins-Abbildung zwischen den Pseudo-Leitungen in der Pseudo-Funktionsleitungsgruppe und den Pseudo-Leitungen in der Pseudo-Schutzleitungsgruppe gemäß einer Ordnung eingerichtet ist, in welcher die Pseudo-Leitungen jeweils in den zwei Pseudo-Leitungsgruppen angeordnet sind.

3. Verfahren gemäß Anspruch 1, wobei das voreingestellte Kriterium dieselbe Quelle und dasselbe Ziel, denselben Pfad, denselben Typ und dieselbe QoS-Bedingung, oder ein Kriterium, das gemäß Übertragungsanforderungen spezifiziert ist, aufweist, aber nicht darauf beschränkt ist.

4. Verfahren gemäß Anspruch 1, wobei die Pseudo-Leitung in der Pseudo-Funktionsleitungsgruppe und der Pseudo-Schutzleitungsgruppe eine Einzelsegment-Pseudo-Leitung oder eine Mehrsegment-Pseudo-Leitung ist.

5. Verfahren gemäß Anspruch 1, wobei eine oder mehr Pseudo-Leitungen in der Pseudo-Funktionsleitungsgruppe und der Pseudo-Schutzleitungsgruppe enthalten ist oder sind.

6. Verfahren gemäß Anspruch 1, wobei festgestellt wird, dass die Schutzumschaltungsbedingung erfüllt ist, wenn eine überwachte Pseudo-Leitung in einer Pseudo-Leitungsgruppe in einem Lokaler-Übertragungsfehler-Zustand und/oder einem Lokaler-Empfangsfehler-Zustand ist und die der überwachten Pseudo-Leitung entsprechende Pseudo-Leitung in der anderen Pseudo-Leitungsgruppe in einem Normal-Zustand ist.

7. Verfahren gemäß Anspruch 6, wobei der Lokaler-Übertragungsfehler-Zustand und der Lokaler-Empfangsfehler-Zustand durch einen Übertragungsfehler oder einen Schnittstellenfehler erzeugt werden können, die in dem Pseudo-Leitung-Absender an einer Quellen-Anbieter-Grenze oder einer Ziel-Anbieter-Grenze, genauso wie der Serverschicht der Pseudoleitung, auftreten.

8. Verfahren gemäß Anspruch 1, wobei festgestellt wird, dass die Schutzumschaltungsbedingung erfüllt ist, wenn eine normale Sitzung der Virtueller-Schaltkreis-Verbindungsprüfung, die für die überwachte Pseudo-Leitung in einer Pseudo-Leitungsgruppe durchgeführt wird, innerhalb einer vorgegebenen Zeitperiode nicht eingerichtet worden ist, und die der Pseudo-Leitung entsprechende Pseudo-Leitung in der anderen Pseudo-Leitungsgruppe in einem Normal-Zustand ist.

9. Verfahren gemäß Anspruch 1, wobei die zwischen der Pseudo-Funktionsleitungsgruppe und der Pseudo-Schutzleitungsgruppe durchgeführte Schutzumschaltung 1+1, 1:1 oder 1:N, unidirektional oder bidirektional, wiederherstellbar oder nicht wiederherstellbar, manuell oder von einem durch Automatik-Schutzumschaltungsprotokolle definierten Modus ist.

10. Einrichtung zur Schutzumschaltung von Pseudo-Leitungen in einem Paketvermittlungsnetzwerk, welche aufweist:
eine Gruppierungseinheit zum Gruppieren von Pseudo-Leitungen in einem Paketvermittlungsnetz gemäß einem voreingestellten Kriterium in eine Pseudo-Funktionsleitungsgruppe und eine Pseudo-Schutzleitungsgruppe, die einander entsprechen, wobei eine Eins-zu-Eins-Abbildung zwischen den Pseudo-Leitungen in der Pseudo-Funktionsleitungsgruppe und den Pseudo-Leitungen in der Pseudo-Schutzleitungsgruppe eingerichtet ist;
eine Pseudo-Leitungsüberwachungseinheit zum Überwachen des Status der Pseudo-Funktionsleitungsgruppe und der Pseudo-Schutzleitungsgruppe und zum Senden von Signalen zu der Schutzumschaltungseinheit, wenn als ein Ergebnis des Überwachens des Zustands der Pseudo-Funktionsleitungsgruppe und der Pseudo-Schutzleitungsgruppe festgestellt wird, dass eine Schutzumschaltungsbedingung erfüllt ist,
eine Schutzumschaltungseinheit zum Durchführen der Schutzumschaltung zwischen der Pseudo-Funktionsleitungsgruppe und der Pseudo-Schutzleitungsgruppe gemäß den empfangenen Signalen bei Diensten.

11. Einrichtung gemäß Anspruch 10, wobei die Eins-zu-Eins-Abbildung zwischen den Pseudo-Leitungen in der Pseudo-Funktionsleitungsgruppe und den Pseudo-Leitungen in der Pseudo-Schutzleitungsgruppe gemäß einer Ordnung eingerichtet ist, in welcher die Pseudo-Leitungen jeweils in den zwei Pseudo-Leitungsgruppen angeordnet sind.

12. Einrichtung gemäß Anspruch 10, wobei das voreingestellte Kriterium dieselbe Quelle und dasselbe Ziel, denselben Pfad, denselben Typ und dieselbe QoS-Bedingung, oder ein gemäß Übertragungsbedingungen spezifiziertes Kriterium aufweist, aber nicht darauf beschränkt ist.

13. Einrichtung gemäß Anspruch 10, wobei die Pseudo-Leitung in der Pseudo-Funktionsleitungsgruppe und der Pseudo-Schutzleitungsgruppe eine Einzelsegment-Pseudo-Leitung oder eine Mehrsegment-Pseudo-Leitung ist.

14. Einrichtung gemäß Anspruch 10, wobei eine oder mehr Pseudo-Leitungen in der Pseudo-Funktionsleitungsgruppe und der Pseudo-Schutzleitungsgruppe enthalten ist oder sind.

15. Einrichtung gemäß Anspruch 10, wobei die zwischen der Pseudo-Funktionsleitungsgruppe und der Pseudo-Schutzleitungsgruppe durchgeführte Schutzumschaltung 1+1, 1:1 oder 1:N, unidirektional oder bidirektional, wiederherstellbar oder nicht wiederherstellbar, manuell oder von einem durch APS-Protokolle definierten Modus sein kann.

16. Verfahren gemäß Anspruch 1, wobei das Überwachen ein Überwachen des Zustands einer oder mehrerer typischer Pseudo-Leitungen in der Pseudo-Funktionsleitungsgruppe und der Pseudo-Schutzleitungsgruppe in Echtzeit aufweist.

## Revendications

1. Procédé de commutation de protection de pseudo-câbles sur un réseau à commutation de paquets, comportant les étapes ci-dessous consistant à :
> regrouper, selon un critère prédéfini, les pseudo-câbles présents sur un réseau à commutation de paquets en un groupe de pseudo-câbles fonctionnels et un groupe de pseudo-câbles de protection correspondant l'un à l'autre, une mise en correspondance individuelle étant établie entre les pseudo-câbles dans le groupe de pseudo-câbles fonctionnels et les pseudo-câbles dans le groupe de pseudo-câbles de protection, et
> contrôler l'état du groupe de pseudo-câbles fonctionnels et du groupe de pseudo-câbles de protection, et mettre en oeuvre, sur des services, la commutation de protection entre le groupe de pseudo-câbles fonctionnels et le groupe de pseudo-câbles de protection lorsqu'il est déterminé qu'une condition de commutation de protection est rencontrée suite au contrôle de l'état du groupe de pseudo-câbles fonctionnels et du groupe de pseudo-câbles de protection.

2. Procédé selon la revendication 1, dans lequel la mise en correspondance individuelle est établie entre les pseudo-câbles dans le groupe de pseudo-câbles fonctionnels et les pseudo-câbles dans le groupe de pseudo-câbles de protection selon un ordre dans lequel les pseudo-câbles sont agencés dans les deux groupes de pseudo-câbles, respectivement.

3. Procédé selon la revendication 1, dans lequel le critère prédéfini inclut, sans s'y limiter, la même source et la même destination, le même chemin, le même type et la même exigence de qualité de service, ou un critère spécifié selon les exigences de transmission.

4. Procédé selon la revendication 1, dans lequel le pseudo-câble dans le groupe de pseudo-câbles fonctionnels et dans le groupe de pseudo-câbles de protection est un pseudo-câble à segment unique ou un pseudo-câble à segments multiples.

5. Procédé selon la revendication 1, dans lequel un ou plusieurs pseudo-câbles est ou sont inclus dans le groupe de pseudo-câbles fonctionnels et dans le groupe de pseudo-câbles de protection.

6. Procédé selon la revendication 1, dans lequel il est déterminé que la condition de commutation de protection est rencontrée lorsqu'un pseudo-câble dans le groupe de pseudo-câbles fonctionnels présente un état de panne de transmission locale et/ou un état de panne de réception locale, et que le pseudo-câble correspondant au pseudo-câble contrôlé dans l'autre groupe de pseudo-câbles présente un état normal.

7. Procédé selon la revendication 6, dans lequel l'état de panne de transmission locale et l'état de panne de réception locale peuvent être générés par une panne de transmission ou par une panne d'interface survenue dans l'élément d'acheminement de pseudo-câbles sur un routeur de périphérie source ou un routeur de périphérie de destination, ainsi que sur la couche serveur du pseudo-câble.

8. Procédé selon la revendication 1, dans lequel il est déterminé que la condition de commutation de protection est rencontrée lorsqu'une session normale de la vérification de continuité de circuit virtuel mise en oeuvre pour le pseudo-câble contrôlé dans un groupe de pseudo-câbles n'a pas été établie dans une période de temps prédéfinie, et que le pseudo-câble correspondant au pseudo-câble contrôlé dans l'autre groupe de pseudo-câbles présente un état normal.

9. Procédé selon la revendication 1, dans lequel la commutation de protection mise en oeuvre entre le groupe de pseudo-câbles fonctionnels et le groupe de pseudo-câbles de protection peut être du type 1 + 1, 1 : 1, 1 : N, unidirectionnelle ou bidirectionnelle, récupérable ou non récupérable, manuelle, ou d'un mode défini par des protocoles de commutation de protection automatique.

10. Dispositif pour mettre en oeuvre une commutation de protection de pseudo-câbles sur un réseau à commutation de paquets, comportant :
> une unité de regroupement pour regrouper, selon un critère prédéfini, des pseudo-câbles présents sur un réseau à commutation de paquets en un groupe de pseudo-câbles fonctionnels et un groupe de pseudo-câbles de protection correspondant l'un à l'autre, une mise en correspondance individuelle étant établie entre les pseudo-câbles dans le groupe de pseudo-câbles fonctionnels et les pseudo-câbles dans le groupe de pseudo-câbles de protection ;
> une unité de contrôle d'état de pseudo-câbles pour contrôler l'état du groupe de pseudo-câbles fonctionnels et du groupe de pseudo-câbles de protection, et pour envoyer des signaux à l'unité de commutation de protection lorsqu'il est déterminé qu'une condition de commutation de protection est rencontrée suite au contrôle de l'état du groupe de pseudo-câbles fonctionnels et du groupe de pseudo-câbles de protection ; et
> une unité de commutation de protection pour mettre en oeuvre, sur des services, la commutation de protection entre le groupe de pseudo-câbles fonctionnels et le groupe de pseudo-câbles de protection selon les signaux reçus.

11. Dispositif selon la revendication 10, dans lequel la mise en correspondance individuelle est établie entre les pseudo-câbles dans le groupe de pseudo-câbles fonctionnels et les pseudo-câbles dans le groupe de pseudo-câbles de protection selon un ordre dans lequel les pseudo-câbles sont agencés dans les deux groupes de pseudo-câbles, respectivement.

12. Dispositif selon la revendication 10, dans lequel le critère prédéfini inclut, sans s'y limiter, la même source et la même destination, le même chemin, le même type et la même exigence de qualité de service, ou un critère spécifié selon des exigences de transmission.

13. Dispositif selon la revendication 10, dans lequel le pseudo-câble dans le groupe de pseudo-câbles fonctionnels et dans le groupe de pseudo-câbles de protection est un pseudo-câble à segment unique ou un pseudo-câble à segments multiples.

14. Dispositif selon la revendication 10, dans lequel un ou plusieurs pseudo-câbles sont, inclus dans le groupe de pseudo-câbles fonctionnels et dans le groupe de pseudo-câbles de protection.

15. Dispositif selon la revendication 10, dans lequel la commutation de protection mise en oeuvre entre le groupe de pseudo-câbles fonctionnels et le groupe de pseudo-câbles de protection peut être du type 1 + 1, 1 : 1 ou 1 : N, unidirectionnelle ou bidirectionnelle, récupérable ou non récupérable, manuelle, ou d'un mode défini par des protocoles de commutation de protection automatique (APS).

16. Procédé selon la revendication 1, dans lequel le contrôle comprend un contrôle en temps réel de l'état d'un ou plusieurs pseudo-câbles (PWs) typiques dans le groupe de pseudo-câbles (PWG) fonctionnels et dans le groupe de pseudo-câbles (PW) de protection.
